# EUROPÄISCHE PATENTSCHRIFT

(11) **EP 2 952 826 B1**
(45) Veröffentlichungstag und Bekanntmachung des Hinweises auf die Patenterteilung: **04.04.2018**
(21) Anmeldenummer: 15164775.7
(22) Anmeldetag: 23.04.2015
(51) Int. Cl.: F24J 2/51, F24J 2/26

(54) **VERFAHREN ZUM HERSTELLEN EINES SOLARKOLLEKTORS UND SOLARKOLLEKTOR**
METHOD FOR PRODUCING A SOLAR COLLECTOR AND SOLAR COLLECTOR
PROCÉDÉ DE PRODUCTION D'UN CAPTEUR SOLAIRE ET CAPTEUR SOLAIRE

(30) Priorität: 05.06.2014 DE 102014210674
(43) Veröffentlichungstag der Anmeldung: 09.12.2015
(73) Patentinhaber: Robert Bosch GmbH, 70442 Stuttgart (DE)
(72) Erfinder: Schneider, Tobias, 35110 Frankenau (DE); Clement, Uwe, 73114 Schlat (DE)

(56) Entgegenhaltungen:
- EP-A1- 0 468 124
- EP-A2- 2 522 927
- JP-A- H09 217 961
- US-A1- 2005 072 488
- US-A1- 2008 302 059

## Beschreibung

Die Erfindung betrifft ein Verfahren zum Herstellen eines Solarkollektors gemäß Patentanspruch 1 und einen Solarkollektor gemäß Patentanspruch 6.

### Stand der Technik

Aus DE 100 37 088 A1 ist ein Folien-Solarkollektor mit transparenter Wärmedämmung bekannt. Der Kollektor ist als Vakuumisolationspaneel in Sandwichbauweise ausgeführt. Zwischen vorderseitiger transparenter und rückseitiger Folie werden granulares Aerogel, Absorber, Rohrleitungen und rückseitiges Dämmmaterial eingeschlossen und luftdicht versiegelt. Durch das Vakuum erfolgt sowohl die konstruktive Festigung der Struktur als auch die Reduktion der Wärmeleitfähigkeit insbesondere der rückseitigen Dämmung auf ca. 5 mW/mK.

Die EP 2522927 A2 offenbart einen solarthermischen Kollektor mit transparenter Dämmung. Mindestens eine Dämmschicht besteht aus einem Aerogel.

Die EP 0468124 A1 offenbart ein Verfahren zur Herstellung von mehrteiligen Paneelen mit granularem Aerogel, bei dem das Aerogel in das vibrierende Paneel eingebracht wird.

### Offenbarung der Erfindung

Die Aufgabe der Erfindung besteht darin, ein einfacheres Verfahren unter Atmosspährenbedingungen zum Herstellen eines Solarkollektors und einen verbesserten Solarkollektor bereitzustellen.

Die Aufgabe der Erfindung wird durch das Verfahren gemäß Patentanspruch 1 und durch den Solarkollektor gemäß Patentanspruch 6 gelöst.

Das erfindungsgemäße Verfahren zum Herstellen eines Solarkollektors mit einem Gehäuse mit einer lichtaufnehmenden Seite und einer Bodenplatte, mit einem Absorber, der zwischen der lichtaufnehmenden Seite und der Bodenplatte angeordnet ist, wobei Partikel in das Gehäuse gefüllt werden, wobei die Partikel durch Schwingungen verdichtet werden und somit eine dicht gepackte Schicht aus den Partikeln erhalten wird, in die der Absorber eingebettet ist, ist dadurch gekennzeichnet, dass in einem ersten Verfahrensschritt eine erste Teilschicht in das Gehäuse gefüllt wird, wobei in einem zweiten Verfahrensschritt der Absorber auf die erste Teilschicht aufgelegt wird, wobei in einem dritten Verfahrensschritt der Absorber zu Schwingungen angeregt wird, wobei in einem vierten Verfahrensschritt eine zweite Teilschicht aus Partikeln auf den Absorber gefüllt wird, wobei in einem fünften Verfahrensschritt eine transparente Abdeckung auf die zweite Teilschicht aufgelegt wird, und wobei die transparente Abdeckung in einem sechsten Verfahrensschritt mit dem Gehäuse verbunden wird.

Ein Vorteil des beschriebenen Verfahrens besteht darin, dass eine dichte Packung der Partikel erreicht wird. Dadurch wird zum einen die thermische Isolierung verbessert und zum anderen wird der Absorber in einer definierten Position im Gehäuse festgehalten. Beispielsweise können thermische Längenänderungen des Absorbers nicht zu einer wesentlichen Verschiebung des Absorbers innerhalb des Gehäuses führen. Somit ist es nicht erforderlich, separate Abstandshalter für die Festlegung der Position des Absorbers im Gehäuse vorzusehen. Diese Aufgabe wird durch die thermisch isolierenden Partikel und deren dichte Packung erfüllt. Die Vorteile werden dadurch erreicht, dass die Partikel durch Schwingungen verdichtet werden und eine dicht gepackte Schicht erhalten wird, in der der Absorber eingebettet ist.

Insbesondere die Einleitung der Schwingungen auf die Partikel durch die Verwendung des schwingenden Absorbers ermöglicht eine dichte Packung der Partikel und eine stabile Einbettung des Absorbers in die Partikelschicht.

Gemäß der Erfindung wird mit einfachen Mitteln eine präzise Festlegung der Position des Absorbers innerhalb des Gehäuses erreicht. Dies wird dadurch möglich, dass in das Gehäuse eine erste Teilschicht eingefüllt wird, wobei anschließend der Absorber auf die erste Teilschicht aufgelegt wird, wobei dann der Absorber zu Schwingungen angeregt wird und in die erste Teilschicht eingebettet wird. Anschließend wird eine zweite Teilschicht auf den Absorber gefüllt und die zweite Teilschicht wieder über Schwingungen verdichtet. Durch diesen Ablauf des Verfahrens wird eine präzise Position des Absorbers festgelegt. Dies wird durch die Vorgabe der Höhe der ersten Teilschicht und die Zeitdauer der Schwingungsanregung des Absorbers vor dem Aufbringen der zweiten Teilschicht erreicht.

In einer Ausführungsform wird eine verbesserte Verdichtung der zweiten Teilschicht erreicht. Dies ist dadurch möglich, dass die transparente Abdeckung auf die zweite Teilschicht aufgelegt wird und in Schwingungen versetzt wird. Auf diese Weise wird die zweite Teilschicht mithilfe der transparenten Abdeckung verdichtet. Erst anschließend wird die transparente Abdeckung mit dem Gehäuse fest verbunden. Somit kann die transparente Abdeckung, die als Abdeckung des Gehäuses dient, gleichzeitig als Verdichtungsplatte für die zweite Teilschicht verwendet werden.

In einer weiteren Ausführungsform wird die Verdichtung der Schicht dadurch verbessert, dass beim Einfüllen der zweiten Teilschicht der Absorber zu Schwingungen angeregt wird. Dieses Verfahren verbessert die Verdichtung der zweiten Teilschicht.

In einer nicht von der Erfindung umfassten Ausführungsform wird ein einfaches Verfahren zum Herstellen des Solarkollektors bereitgestellt. Dabei wird das Gehäuse mit dem Absorber bereitgestellt, wobei der Absorber in Bezug auf die Position relativ zum Gehäuse festgelegt ist. Dies kann beispielsweise durch temporäre Abstandshalter und/oder durch Positionierung der Zuleitung oder Ableitung des Absorbers in das Gehäuse erreicht werden. In das Gehäuse mit dem montierten Absorber werden die Partikel sowohl zwischen einer Oberseite des Gehäuses und dem Absorber und einer Unterseite des Gehäuses und dem Absorber eingefüllt. Während des Einfüllens der Partikel wird der Absorber zu Schwingungen angeregt. Auf diese Weise wird eine dichte Schichtung der Partikel im Gehäuse erreicht. Das Gehäuse wird stufenweise aufgefüllt und anschließend wird die Einfüllöffnung verschlossen.

Ebenfalls nicht von der Erfindung umfasst wird eine einfache Durchführung des Verfahrens dadurch erreicht, dass der Solarkollektor in eine im Wesentlichen senkrechte Position gebracht wird. Bei dieser Anordnung ist auch der Absorber im Wesentlichen senkrecht ausgerichtet, sodass das Einfüllen der Partikel von oben und die Verteilung der Partikel durch die Schwerkraft unterstützt werden. Insbesondere ist bei dieser Vorgehensweise kein Einblasen oder Einsaugen der Partikel in das Gehäuse erforderlich. Damit sind die Vorrichtung zum Herstellen des Kollektors und das Verfahren zum Herstellen des Kollektors vereinfacht.

In einer Ausführungsform werden zwischen einer lichtaufnehmenden Seite und dem Absorber Partikel eingefüllt, die thermisch isolierend und optisch transparent sind. Zwischen dem Absorber und einer Bodenplatte werden weitere Partikel eingefüllt, die thermisch isolierend sind. Abhängig von der Ausführung können die weiteren Partikel auch optisch transparent sein. Insbesondere können die Partikel und die weiteren Partikel aus dem gleichen Material bestehen und optisch transparent sein.

In einer weiteren Ausführungsform werden Partikel aus granularem Aerogel verwendet. Die Partikel weisen zwei wesentliche Eigenschaften auf, die erste Eigenschaft besteht in einer hohen thermischen Isolation und die zweite Eigenschaft besteht in einer hohen optischen Durchlässigkeit, sodass zum einen die Wärmestrahlung der Sonne vom Absorber mit geringen Verlusten eingefangen werden kann und zum anderen die Wärme des Absorbers thermisch isoliert ist und über das Fluid des Absorbers bzw. der Absorberleitungen mit geringen Verlusten abgeführt werden kann.

Der erfindungsgemäße Solarkollektor mit einem Gehäuse, wobei im Gehäuse ein Absorber vorgesehen ist, wobei zwischen einer lichtaufnehmenden Seite des Gehäuses und dem Absorber eine Schicht aus Partikeln angeordnet ist, wobei die Partikel thermisch isolierend und optisch transparent sind, wobei zwischen einer Bodenplatte des Gehäuses und dem Absorber eine weitere Schicht aus weiteren Partikeln angeordnet ist, dass die weiteren Partikel thermisch isolierend sind und, dass die lichtaufnehmende Seite durch eine transparente Abdeckung gebildet ist, hergestellt nach einem der vorgenannten Verfahren, ist dadurch gekennzeichnet, dass die Bodenplatte des Gehäuses Vertiefungen aufweist, wobei der Absorber eine Absorberleitung aufweist, und in den Vertiefungen Abschnitte der Absorberleitung angeordnet sind.

Der vorgeschlagene Solarkollektor weist den Vorteil auf, dass die Position des Absorbers im Gehäuse präzise festgelegt ist, der Absorber thermisch gut isoliert ist und zudem der Solarkollektor einfach und kostengünstig hergestellt werden kann.

Hierbei wird die Festlegung der Position des Absorbers mit einer geringeren Menge von Partikeln erreicht. Dies ist dadurch möglich, dass das Gehäuse Vertiefungen aufweist, wobei Abschnitte der Absorberleitung in den Vertiefungen angeordnet sind. Somit müssen nur die Freiräume zwischen den Absorberleitungen und den Wänden der Vertiefungen mit den Partikeln aufgefüllt werden. Somit können Partikel eingespart werden. Damit ist eine kostengünstige Herstellung des Solarkollektors möglich.

Die Erfindung wird im Folgenden näher erläutert. Es zeigen
Figuren 1 bis 5 Verfahrensschritte eines ersten Verfahrens, und
Figuren 6 bis 9 Verfahrensschritte eines zweiten, nicht von der Erfindung umfassten Verfahrens, und
Figuren 10 bis 13 Verfahrensschritte eines dritten Verfahrens.

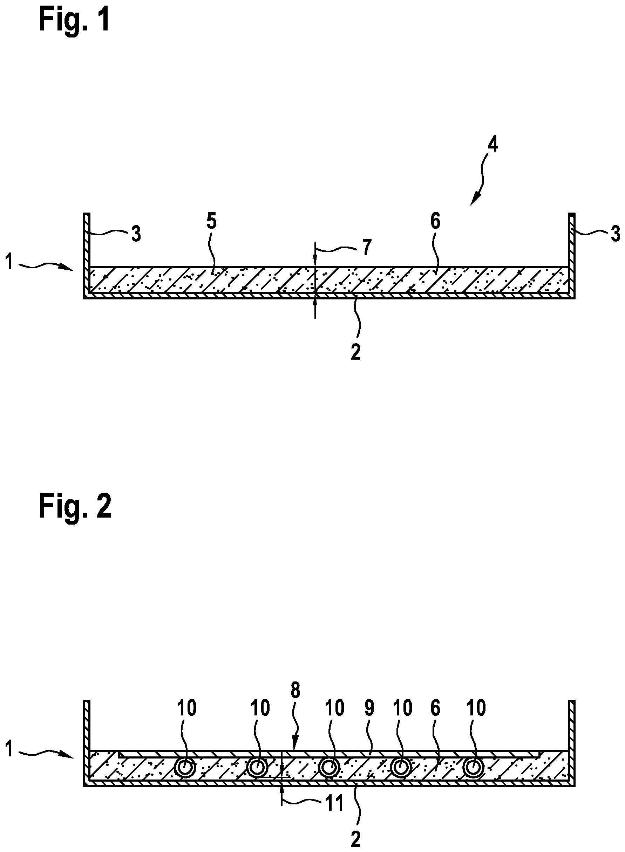

Fig. 1 zeigt in einer schematischen Darstellung einen Querschnitt durch ein Grundgehäuse 1 eines Solarkollektors. Das Grundgehäuse 1 umfasst eine Bodenplatte 2, die umlaufend mit einem Seitenrahmen 3 versehen ist. Die Bodenplatte 2 kann beispielsweise eine rechteckige Form aufweisen. Die Seitenrahmen 3 umfassen entsprechend vier Seitenabschnitte, wobei in der Fig. 1 nur zwei Seitenabschnitte schematisch dargestellt sind. Das Grundgehäuse 1 weist einen Aufnahmeraum 4 auf, der in der dargestellten Situation mit einer ersten Teilschicht 5 aus Partikeln 6 aufgefüllt ist. Die erste Teilschicht 5 weist eine festgelegte Höhe 7 auf.

Die Partikel 6 sind aus einem Material hergestellt, das thermisch isolierend ist und gleichzeitig optisch transparent ist. Vorzugsweise ist das Material in einem Wellenlängenbereich zwischen 0,3 und 2,5 µm durchlässig, d.h. im Wesentlichen für Sonnenlicht transparent. Die Partikel werden als optisch transparent angesehen, wenn der optische Energiedurchlass größer 50%, insbesondere größer 70% gemäß der DIN EN 410 ist. Die thermische Leitfähigkeit kann im Bereich von 10-20 mW/mK liegen. Als Material kann beispielsweise ein Aerogel auf Silikatbasis in Form von Kieselsäureteilchen verwendet werden. Die Körnung der Partikel kann im Bereich zwischen 1 bis 4 mm liegen. Diese Größe der Partikel reicht aus, um Unebenheiten im Gehäuse auszugleichen und um eine dichte Packung der Schicht zu erzielen. Partikel, die nur thermisch isolierend sind, können z. B. aus PIR, d.h. Polyisocyanurate bestehen.

Anschließend wird in einem zweiten Verfahrensschritt ein Absorber 8 auf die erste Teilschicht 5 aufgelegt. Der Absorber 8 weist eine Absorberplatte 9 und Absorberleitungen 10 auf. Der Absorber 8 ist in Fig. 2 schematisch im Querschnitt dargestellt. Anschließend wird der Absorber 8 in Schwingungen versetzt und aufgrund der Schwerkraft oder durch Aufbringung einer Zusatzkraft in die erste Teilschicht 5 versenkt, bis der Absorber 8, insbesondere die Absorberleitungen 10 einen vorgegebenen Abstand 11 zur Bodenplatte 2 aufweisen. Diese Position ist in Fig. 2 dargestellt. Abhängig von der gewählten Ausführungsform kann das Einbetten des Absorbers 8 in die erste Teilschicht 5 auch durch Schwingungen des Grundgehäuses 1 unterstützt werden.

Anschließend wird eine zweite Teilschicht 12 aus den Partikeln 6 auf die erste Teilschicht 5 und auf den Absorber 8 gefüllt. Abhängig von der gewählten Ausführungsform können sich die Partikel 6 der ersten Teilschicht 5 und die Partikel 6 der zweiten Teilschicht 12 auch in optischen, chemischen, mechanischen und/oder thermischen Eigenschaften unterscheiden. Beispielsweise können die Partikel der verschiedenen Teilschichten aus verschiedenen Materialien bestehen und/oder verschiedene Korngrößen aufweisen. Zudem können die Partikel der ersten Teilschicht 5 nur optisch isolierend sein und die Partikel der zweiten Teilschicht 12 optisch isolierend und optisch transparent sein.

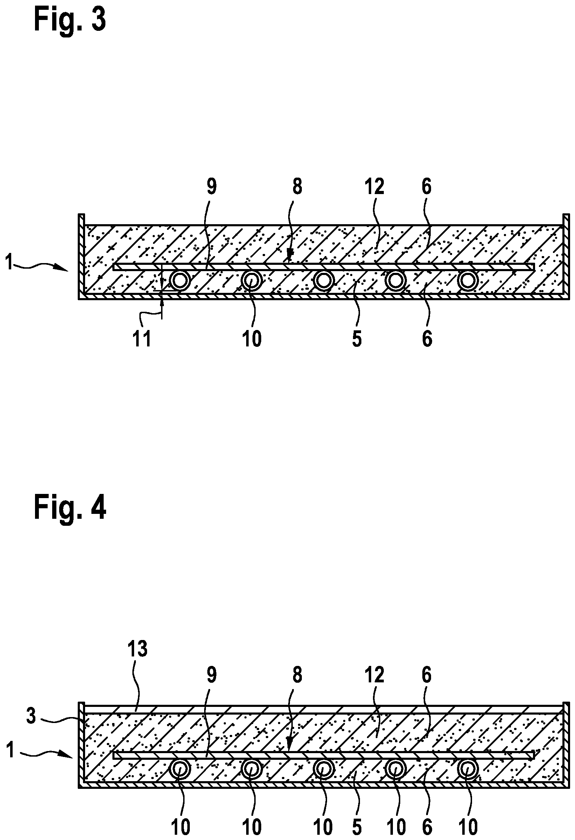

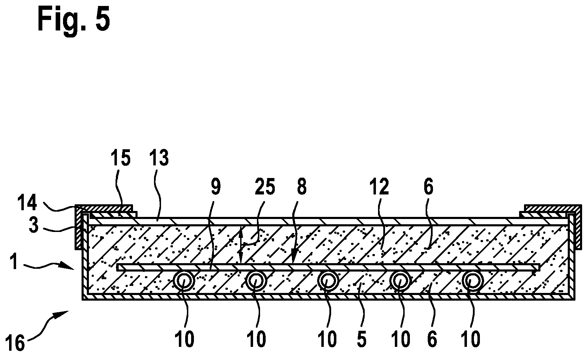

In einem weiteren Verfahrensschritt wird eine transparente Abdeckung 13 auf die zweite Teilschicht 12 aufgelegt. Vorzugsweise wird die transparente Abdeckung 13 in Schwingungen versetzt und dadurch die zweite Teilschicht 12 verdichtet. Zudem kann abhängig von der gewählten Ausführungsform auch das Grundgehäuse 1 zu Schwingungen angeregt werden, um die zweite Teilschicht 12 zu verdichten. Dieser Verfahrensstand ist in Fig. 4 dargestellt. Nach einer entsprechenden Verdichtung der zweiten Teilschicht 12, die durch die Zeitdauer der Schwingungen der transparenten Abdeckung 13 und/oder durch die Frequenzen und/oder der Amplituden der Schwingungen der transparenten Abdeckung 13 festgelegt werden kann, wird die transparente Abdeckung 13 mit dem Seitenrahmen 3 verbunden und ein Solarkollektor 16 erhalten, wie in Figur 5 dargestellt ist. Dazu wird eine Klemmleiste 14 und vorzugsweise eine Dichtung 15 verwendet. Die Klemmleiste 14 und die Dichtung 15 sind umlaufend um einen äußeren Randbereich der transparenten Abdeckung 13 vorgesehen. Die Klemmleiste 14 ist mit dem Seitenrahmen 3 fest verbunden. Die Dichtung 15 sorgt für eine wenigstens wasserdichte Abdichtung zwischen der transparenten Abdeckung 13 und der Klemmleiste 14 bzw. dem Seitenrahmen 3.

Die Schwingungen werden entweder über die Absorberplatte 9 und/oder über die Absorberleitung 10 auf den Absorber 8 übertragen. Die Schwingungen werden mechanisch erzeugt und als Folge von den übertragenen Schwingungen dient der Absorber als Resonator für die Schwingungen, die auf die erste und/oder zweite Teilschicht 5, 12 übertragen werden. Durch die Schwingung des Absorbers wird das Granulat aus den Partikeln 6 im Grundgehäuse 1 verteilt und gleichzeitig verdichtet. Dadurch kann ein lückenloses Füllen des Grundgehäuses 1 und ein fester Sitz des Absorbers im Granulat erreicht werden.

Beim Auffüllen der zweiten Teilschicht 12 kann gleichzeitig der Absorber 8 zu Schwingungen angeregt werden, um die Verteilung der Partikel zu unterstützen. Die transparente Abdeckung 13, die beispielsweise als Glasscheibe ausgebildet ist, kann ebenfalls als Rüttelelement verwendet werden, um die Partikel weiter zu verdichten. Durch die Verdichtung der zweiten Teilschicht 12 kann die transparente Abdeckung 13 direkt auf die zweite Teilschicht 12 aufgesetzt werden. Als Nebeneffekt kann auf sonst notwendige Halterungen für das Glas verzichtet werden, da die Höhenposition der transparenten Abdeckung 13 durch die feste zweite Teilschicht 12 festgelegt ist. Ein gleichzeitig schwingender Absorber 8 kann optional das Schwingen der transparenten Abdeckung 13 unterstützen. Aufgrund der festen Positionierung des Absorbers 8 können Wärmeausdehnungen des Absorbers 8 nicht zu einer undefinierten Verformung des Absorbers 8 führen. Damit kann beispielsweise der festgelegte Abstand 11 zwischen der Absorberleitung 10 und der Bodenplatte 2 oder auch ein zweiter Abstand 25 zwischen Absorber 8 und transparenten Abdeckung 13 auch bei Wärmeausdehnungen sicher eingehalten werden. Die Figuren 1 bis 5 zeigen eine horizontale Lagerung des Grundgehäuses 1.

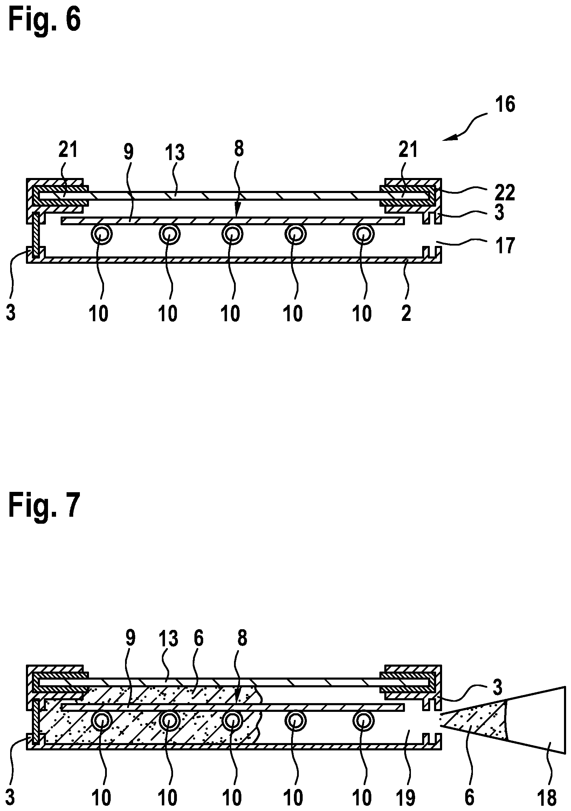

Die Figuren 6 bis 9 zeigen ein weiteres, nicht von der Erfindung umfasstes Verfahren zur Herstellung eines Solarkollektors. Fig. 6 zeigt einen Solarkollektor 16, der ein Grundgehäuse 1 aufweist, das mit einer transparenten Abdeckung 13 verschlossen ist. Die transparente Abdeckung 13 ist an einer Licht aufnehmenden Seite des Solarkollektors 16 angeordnet. Die transparente Abdeckung 13 ist umlaufend mit einem Randbereich 21 in eine umlaufende Ausnehmung 22 des Seitenrahmens 3 eingesteckt. Zudem ist eine Dichtung 15 vorgesehen, die den Innenraum 19 des Solarkollektors wasserdicht abdichtet.

Das Grundgehäuse 1 weist eine Öffnung 17 auf, die in einem Seitenbereich des Seitenrahmens 3 ausgebildet ist. Der Solarkollektor 16 ist in einer vertikalen Stellung angeordnet, wobei die Öffnung 17 oben ist. Der Absorber 8 ist in dieser Position des Solarkollektors 16 ebenfalls vertikal angeordnet. Der Absorber 8 ist entweder über entsprechende Abstandshalter in der Position relativ zum Grundgehäuse 1 festgelegt oder der Absorber 8 ist über wenigstens einen Zuführabschnitt der Absorberleitung 10 und eine Abführleitung der Absorberleitung 10, die durch den Seitenrahmen 3 geführt sind, in der Position relativ zum Grundgehäuse 1 fixiert.

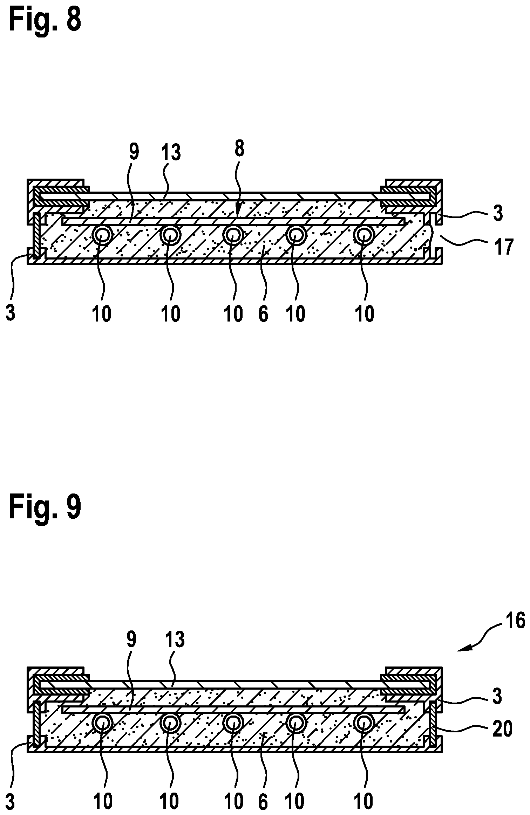

Bei einem folgenden Verfahrensschritt, der in Fig. 7 dargestellt ist, werden Partikel 6 über einen Trichter 18 in die seitliche Öffnung 17 eingefüllt. Während des Einfüllens sind wenigstens der Absorber 8 und/oder das Grundgehäuse 1 und die transparente Abdeckung 13 in Schwingungen versetzt. Die Schwingungen werden mechanisch erzeugt. Der Absorber 8 kann beispielsweise über den Zuführabschnitt- und/oder die Abführleitung der Absorberleitung 10 in Schwingungen versetzt werden. Durch die Vibrationen des Absorbers und/oder des Grundgehäuses 1 und/oder der transparenten Abdeckung 13 werden die eingefüllten Partikel gut verteilt und verdichtet. Auf diese Weise wird der gesamte Innenraum 19 dicht mit Partikel aufgefüllt, wie in Fig. 8 dargestellt ist. Der Absorber 8 ist nun vollständig in die Schicht aus Partikeln 6 eingebettet. Anschließend wird die seitliche Öffnung 17 verschlossen. Dazu kann beispielsweise ein Profil 20 in die seitliche Öffnung 17 eingeschoben werden. Das Profil 20 kann mit dem Seitenrahmen 3 verklebt, verschraubt oder verklemmt werden.

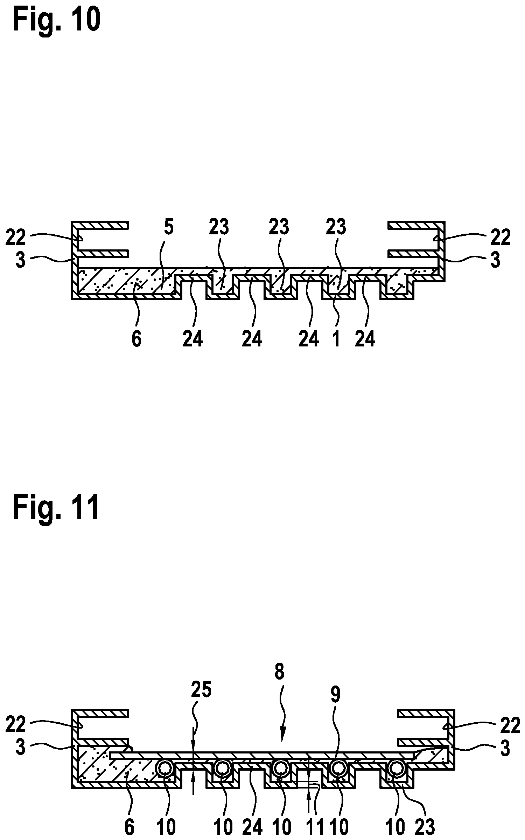

Die Figuren 10 bis 13 zeigen eine weitere Ausführungsform des Verfahrens gemäß dem Verfahren der Figuren 1 bis 5, wobei jedoch das Grundgehäuse 1 Vertiefungen 23 aufweist. Das Grundgehäuse 1 wird mit einer ersten Teilschicht 5 von Partikeln 6 aufgefüllt. Dabei werden die Vertiefungen 23 beispielsweise vollständig aufgefüllt. Zudem wird die erste Teilschicht 5 so weit aufgefüllt, dass auch erhöhte Bereiche 24, die zwischen den Vertiefungen 23 angeordnet sind, mit Partikeln 6 bedeckt sind. Anschließend wird der Absorber 8 in der Weise auf der Bodenplatte 2 aufgelegt, dass wenigstens die Absorberleitungen 10 oberhalb der Vertiefungen 23 liegen. Anschließend wird durch eine Schwingungserzeugung am Absorber 8 und beispielsweise durch eine Kraft von oben der Absorber 8 in die erste Teilschicht 5 eingebettet, wie in Fig. 11 dargestellt ist. Dabei ist darauf zu achten, dass ein Abstand 11 zwischen der Absorberplatte 9 und den Erhöhungen 24 verbleibt, der mit Partikeln 6 gefüllt ist. Ebenso weisen die Absorberleitungen 10 einen definierten Abstand zu der Wandung der Vertiefungen 23 auf, der mit Partikeln 6 gefüllt ist.

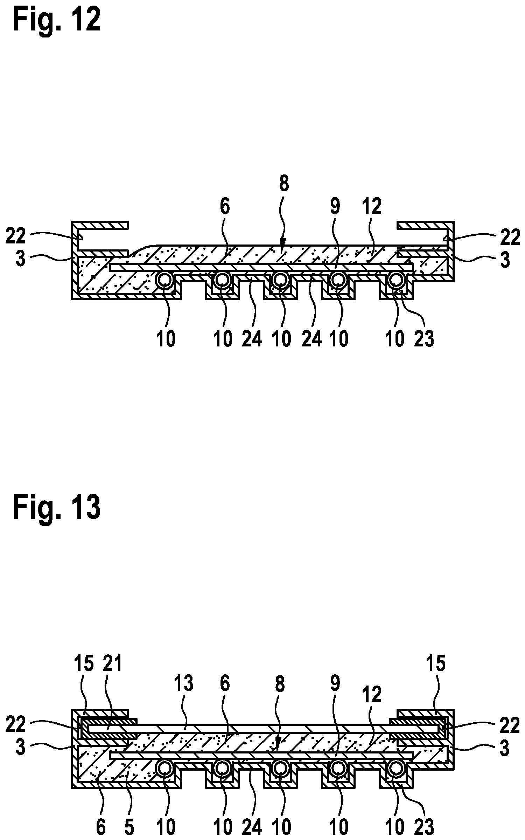

In einem weiteren Verfahrensschritt wird gemäß der Fig. 3 eine zweite Teilschicht 12 auf den Absorber 8 aufgebracht, wie in Fig. 12 dargestellt ist. Anschließend wird eine transparente Abdeckung 13 auf die zweite Teilschicht 12 aufgelegt und in Schwingungen versetzt. Zudem kann zur Unterstützung der Verdichtung der zweiten Teilschicht 12 auch der Absorber 8 und/oder das Grundgehäuse 1 in Schwingungen versetzt werden. Nach einer entsprechenden Verdichtung der zweiten Schicht 12 wird die transparente Abdeckung 13 am Seitenrahmen 3 des Grundgehäuses befestigt, wie in Fig. 13 dargestellt ist.

Durch das Vorsehen der Vertiefungen 23 können Partikel 6 eingespart werden. Trotz der Einsparung der Partikel 6 ist der Absorber 8 dicht gepackt in der Schicht der Partikel 6 angeordnet. Zudem ist eine ausreichende thermische Isolierung zwischen der Absorberplatte 9 und der Bodenplatte 2 bzw. zwischen den Absorberleitungen 10 und der Bodenplatte 2 gegeben.

In einer weiteren Ausführung kann auch die Bodenplatte 2 des Grundgehäuses 1 der Figuren 6 bis 9 Vertiefungen und Erhöhungen aufweisen, wobei der Absorber mit den Absorberleitungen in den Vertiefungen angeordnet ist. Der Solarkollektor wird wie anhand der Figuren 6 bis 9 erläutert wurde, mit einer Schicht aus Partikeln aufgefüllt.

## Patentansprüche

1. Verfahren zum Herstellen eines Solarkollektors (16) mit einem Gehäuse (1) mit einer lichtaufnehmenden Seite (13) und einer Bodenplatte (2), mit einem Absorber (8), der zwischen der lichtaufnehmenden Seite (13) und der Bodenplatte (2) angeordnet ist, wobei Partikel (6) in das Gehäuse (1) gefüllt werden, **dadurch gekennzeichnet, dass** die Partikel (6) durch Schwingungen verdichtet werden und somit eine dicht gepackte Schicht (5, 12) aus den Partikeln (6) erhalten wird, in die der Absorber (8) eingebettet ist, wobei in einem ersten Verfahrensschritt eine erste Teilschicht (5) in das Gehäuse (1) gefüllt wird, wobei in einem zweiten Verfahrensschritt der Absorber (8) auf die erste Teilschicht (5) aufgelegt wird, wobei in einem dritten Verfahrensschritt der Absorber (8) zu Schwingungen angeregt wird, wobei in einem vierten Verfahrensschritt eine zweite Teilschicht (12) aus Partikeln (6) auf den Absorber (8) gefüllt wird, wobei in einem fünften Verfahrensschritt eine transparente Abdeckung (13) auf die zweite Teilschicht (12) aufgelegt wird, und wobei die transparente Abdeckung (13) in einem sechsten Verfahrensschritt mit dem Gehäuse (1) verbunden wird.

2. Verfahren nach Anspruch 1 oder 2, wobei die transparente Abdeckung (13) im fünften Verfahrensschritt in Schwingungen versetzt wird, um die Partikel (6) zu verdichten.

3. Verfahren nach einem der vorstehenden Ansprüche, wobei der Absorber (8) während des vierten Verfahrensschrittes beim Einfüllen der zweiten Teilschicht (12) zu Schwingungen angeregt wird.

4. Verfahren nach einem der vorhergehenden Ansprüche, wobei die Partikel in Form von granularem Aerogel ausgebildet sind.

5. Verfahren nach einem der vorhergehenden Ansprüche, wobei zwischen der transparenten Abdeckung (13) und dem Absorber (8) Partikel (6) eingefüllt werden, die optisch transparent sind und thermisch isolierend sind und, wobei zwischen dem Absorber (8) und der Bodenplatte (2) Partikel (6) eingefüllt werden, die thermisch isolierend sind.

6. Solarkollektor (16) mit einem Gehäuse (1, 13), wobei im Gehäuse (1, 13) ein Absorber (8) vorgesehen ist, wobei zwischen einer lichtaufnehmenden Seite (13) des Gehäuses (1) und dem Absorber (8) eine Schicht aus Partikeln (6) angeordnet ist, wobei die Partikel (6) thermisch isolierend und optisch transparent sind, wobei zwischen einer Bodenplatte (2) des Gehäuses (1) und dem Absorber (8) eine weitere Schicht aus weiteren Partikeln (6) angeordnet ist, dass die weiteren Partikel (6) thermisch isolierend sind und, dass die lichtaufnehmende Seite (13) durch eine transparente Abdeckung (13) gebildet ist, hergestellt nach einem der Ansprüche 1 bis 5, **dadurch gekennzeichnet, dass** die Bodenplatte (2) des Gehäuses (1) Vertiefungen (23) aufweist, wobei der Absorber (8) eine Absorberleitung (10) aufweist, und in den Vertiefungen (23) Abschnitte der Absorberleitung (10) angeordnet sind.

7. Solarkollektor nach Anspruch 6, wobei der Absorber (8) ein Absorberblech (9) aufweist, das mit der Absorberleitung (10) verbunden ist, und wobei das Absorberblech (9) oberhalb der Vertiefungen (23) angeordnet ist.

8. Solarkollektor nach einem der Ansprüche 6 und 7, wobei die Partikel (6) in Form von granularem Aerogel ausgebildet sind.

## Claims

1. Method for producing a solar collector (16) having a housing (1) with a light-receiving side (13) and a base plate (2), having an absorber (8) which is arranged between the light-receiving side (13) and the base plate (2), particles (6) being put into the housing (1),
**characterized in that**
the particles (6) are compacted by vibrations and thus a densely packed layer (5, 12) of the particles (6), in which the absorber (8) is embedded, is obtained, wherein, in a first method step, a first partial layer (5) is put into the housing (1), wherein, in a second method step, the absorber (8) is laid on the first partial layer (5), wherein, in a third method step, the absorber (8) is excited to vibrate, wherein, in a fourth method step, a second partial layer (12) of particles (6) is put onto the absorber (8), wherein, in a fifth method step, a transparent covering (13) is laid on the second partial layer (12), and wherein the transparent covering (13) is connected to the housing (1) in a sixth method step.

2. Method according to Claim 1 or 2, wherein the transparent covering (13) is set vibrating in the fifth method step in order to compact the particles (6).

3. Method according to one of the preceding claims, wherein the absorber (8) is excited to vibrate during the fourth method step as the second partial layer (12) is put in.

4. Method according to one of the preceding claims, wherein the particles are formed in the form of granular aerogel.

5. Method according to one of the preceding claims, wherein particles (6) which are optically transparent and thermally insulating are put in between the transparent covering (13) and the absorber (8), wherein particles (6) which are thermally insulating are put in between the absorber (8) and the base plate (2).

6. Solar collector (16) having a housing (1, 13), an absorber (8) being provided in the housing (1, 13), a layer of particles (6) being arranged between a light-receiving side (13) of the housing (1) and the absorber (8), the particles (6) being thermally insulating and optically transparent, a further layer of further particles (6) being arranged between a base plate (2) of the housing (1) and the absorber (8), in that the further particles (6) are thermally insulating and in that the light-receiving side (13) is formed by a transparent covering (13), produced in accordance with one of Claims 1 to 5,
**characterized in that**
the base plate (2) of the housing (1) has recesses (23), wherein the absorber (8) has an absorber conduit (10) and sections of the absorber conduit (10) are arranged in the recesses (23).

7. Solar collector according to Claim 6, wherein the absorber (8) has an absorber plate (9), which is connected to the absorber conduit (10), and wherein the absorber plate (9) is arranged above the recesses (23).

8. Solar collector according to either of Claims 6 and 7, wherein the particles (6) are formed in the form of granular aerogel.

## Revendications

1. Procédé de fabrication d'un capteur solaire (16) présentant un caisson (1) doté d'un côté (13) de réception de la lumière et d'une plaque de fond (2), d'un absorbeur (8) disposé entre le côté (13) recevant la lumière et la plaque de fond (2), des particules (6) étant placées dans le caisson (1),
**caractérisé en ce que**
les particules (6) sont compactées par vibration et **en ce que** l'on obtient ainsi une couche dense compactée (5, 12) de particules (6) dans laquelle l'absorbeur (8) est incorporé,
**en ce que** dans une première étape du procédé, une première couche partielle (5) est placée dans le caisson (1),
**en ce que** dans une deuxième étape du procédé, l'absorbeur (8) est placé sur la première couche partielle (5),
**en ce que** dans une troisième étape du procédé, l'absorbeur (8) est mis en vibration,
**en ce que** dans une quatrième étape du procédé, une deuxième couche partielle (12) de particules (6) est placée sur l'absorbeur (8),
**en ce que** dans une cinquième étape du procédé, un recouvrement transparent (13) est placé sur la deuxième couche partielle (12) et
**en ce que** dans une sixième étape du procédé, le recouvrement transparent (13) est relié au caisson (1).

2. Procédé selon la revendication 1 ou 2, dans lequel dans la cinquième étape du procédé, le recouvrement transparent (13) est mis en vibration pour compacter les particules (6).

3. Procédé selon l'une des revendications précédentes, dans lequel pendant la quatrième étape du procédé, l'absorbeur (8) est mis en vibration lors du placement de la deuxième couche partielle (12).

4. Procédé selon l'une des revendications précédentes, dans lequel les particules présentent la forme d'un granulé d'aérogel.

5. Procédé selon l'une des revendications précédentes, dans lequel les particules (6) placées entre le recouvrement transparent (13) et l'absorbeur (8) sont optiquement transparentes et thermiquement isolantes et dans lequel les particules (6) placées entre l'absorbeur (8) et la plaque de fond (2) sont thermiquement isolantes.

6. Capteur solaire (16) présentant un caisson (1, 13), un absorbeur (8) étant prévu dans le caisson (1, 13),
une couche de particules (6) étant disposée entre le côté (13) de reprise de lumière du caisson (1) et l'absorbeur (8),
les particules (6) étant thermiquement isolantes et optiquement transparentes,
une autre couche d'autres particules (6) étant disposée entre la plaque de fond (2) du caisson (1) et l'absorbeur (8),
en ce que les autres particules (6) sont thermiquement isolantes,
en ce que le côté (13) recevant la lumière est formé par un recouvrement transparent (13),
le capteur solaire étant fabriqué selon l'une des revendications 1 à 5,
**caractérisé en ce que**
la plaque de fond (2) du caisson (1) présente des creux (23), l'absorbeur (8) présentant un conduit d'absorbeur (10) et **en ce que** des sections du conduit d'absorbeur (10) sont disposées dans les creux (23).

7. Capteur solaire selon la revendication 6, dans lequel l'absorbeur (8) présente une tôle d'absorbeur (9) reliée au conduit d'absorbeur (10),
la tôle d'absorbeur (9) étant disposée au-dessus des creux (23).

8. Capteur solaire selon l'une des revendications 6 et 7, dans lequel les particules (6) présentent la forme d'un granulé d'aérogel.
